**Europäisches Patentamt**

**European Patent Office**

**Office européen des brevets**

(19)

(11) Veröffentlichungsnummer: **0 192 940**
**B1**

(12)

# EUROPÄISCHE PATENTSCHRIFT

(45) Veröffentlichungstag der Patentschrift:
**24.05.89**

(21) Anmeldenummer: **86100478.6**

(22) Anmeldetag: **16.01.86**

(51) Int. Cl.⁴: **B 60 T 7/12,** B 60 R 19/02,
B 62 D 1/24

(54) **Auffahrschutzvorrichtung für Flurförderfahrzeuge.**

(30) Priorität: **01.03.85 CH 933/85**

(43) Veröffentlichungstag der Anmeldung:
**03.09.86 Patentblatt 86/36**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**DE-B- 1 781 159**
**FR-A- 1 574 435**
**FR-A- 2 114 480**
**FR-A- 2 244 647**
**FR-A- 2 523 908**

(73) Patentinhaber: **JD-Technologie AG, c/o Gestinor
Services AG Chamerstrasse 50, CH-6300 Zug (CH)**

(72) Erfinder: **Feldmann, Hansueli, Paul Jenni-Strasse 3,
CH-2553 Safnern (CH)**
Erfinder: **Brandli, Max, Höheweg 2, CH-2553 Safnern
(CH)**

(74) Vertreter: **Monsch, René et al, E. BLUM & CO.,
Patentanwälte Vorderberg 11, CH-8044 Zürich (CH)**

ACTORUM AG

# Beschreibung

Die Erfindung betrifft eine Auffahrschutzvorrichtung für Flurförderfahrzeuge, in der ein beweglicher Auffahrschutz, der sich mindestens über die ganze Fahrzeugbreite erstreckt und mittels einer Federkraft in einer Ruhelage gehalten wird, mit einer Abschalteinrichtung zusammenarbeitet, welche beim Auffahren des Auffahrschutzes, der dabei entgegen der Federkraft bewegt wird, auf ein Hindernis einen Fahrzeugstop auslöst, wobei der Auffahrschutz eine kurze Betätigungsbewegung der Abschalteinrichtung bewirkt und anschliessend während der Verzögerung des Fahrzeuges eine längere Verschiebungsbewegung ausführt, bei der die Abschalteinrichtung betätigt bleibt.

Solche Auffahrschutzvorrichtungen verhindern weitgehend Schäden beim Auffahren des Fahrzeuges auf ein Hindernis, sei dies ein festes Hindernis oder sei dies ein in Bewegung befindliches Hindernis. Auffahrschutzvorrichtungen müssen demzufolge einwandfreies Funktionieren garantieren, dies besonders, weil sie Bestandteil von automatischen, führerlosen Flurförderfahrzeugen sind, für die das Vorhandensein oder unerwartete Auftauchen eines Hindernisses schwer erkennbar ist.

Eine derartige Auffahrschutzvorrichtung wird in der deutschen Zeitschrift «Automatik» vom April 1959, Seite 108 und 113 erwähnt. Sie enthält einen Auffahrschutz, der aus einem abgerundeten Bügel besteht, der vorne am Fahrzeug über eine federnde Halterung befestigt ist. Beim Auftreffen des Fahrzeuges auf ein Hindernis betätigt der Auffahrschutz, der entgegen der Federkraft bewegt wird, zwei Mikroschalter, durch die der Fahrzeugantrieb abgeschaltet und die Bremse betätigt wird. Mittels der federnden Halterung kann sich der Auffahrschutz über die Betätigungsstellung der Mikroschalter hinaus in der Art bewegen wie sich das Fahrzeug nach dem Stopbefehl auf Grund seiner Trägheit noch weiterbewegt.

Diese Einrichtung, die sich aus einem abgerundeten, verschiebbaren Bügel mit einem vom Fahrzeuggestell aus lenkbaren Träger zusammensetzt, kann sich dann als vorteilhaft erweisen, wenn das Auffahren des Auffahrschutzes mit dem Hindernis in der Längsachse des Fahrzeuges passiert, besonders aber wenn das Fahrzeug nur ein Lenkrad besitzt, welches in der Mitte des lenkbaren Trägers angebracht ist. Die Wirksamkeit der Einrichtung wird fragwürdig, sobald der Aufschlag leicht seitlich des Auffahrschutzes auftritt, insbesondere wenn das Fahrzeug mit zwei Lenkrädern ausgerüstet ist und der Auffahrschutz an einem festen Fahrzeuggestellteil angebracht ist.

Aus der deutschen Patentschrift Nr. 1 781 159 ist eine Einrichtung bekannt, mit der die obigen Nachteile dadurch vermieden werden, dass der Auffahrschutz aus einem als Schlaufe ausgebildeten Rohr besteht, das aus dehnbarem Material aufgebaut und mit einer Flüssigkeit gefüllt ist. Beim Auftreffen irgendeines Punktes des Auffahrschutzes auf ein Hindernis wird die durch die Deformation des Rohres hervorgerufene Druckänderung, z.B. mittels Membranen, zur Betätigung der Abschalteinrichtung verwendet, die einen Fahrzeugstop auslöst.

Der Hauptnachteil dieser Auffahrschutzvorrichtung besteht in der relativen Verletzbarkeit des aus dehnbarem Material aufgebauten Rohres, das auch in verstärkter Ausführung beim Aufprall auf ein Hindernis beschädigt oder durch spitze Gegenstände durchstossen werden kann und dadurch ihre Abschaltfunktion nicht mehr gewährleistet ist. Im übrigen kann ein derartiger, rohrförmiger Auffahrschutz nur in einem beschränkten Höhenbereich Schutz bieten und zudem ist er wegen seiner Dehnbarkeit für heftige Aufschläge weniger geeignet als ein steifer Auffahrschutz.

Eine weitere Einrichtung, die in der deutschen Offenlegungsschrift DE-OS 1 655 813 veröffentlicht ist und mit der oben erwähnte Nachteile vermieden werden, besteht aus einem dehnbaren Auffahrschutz mit einer ringförmigen Schlaufe, deren abgerundeten Enden mit einem lenkbaren, auf der Frontseite des Fahrzeuges angebrachten Träger verbunden sind. Im übrigen ist der dehnbare Auffahrschutz an zwei Punkten seines Umfanges mit dem lenkbaren Träger mittels einer Abschalteinrichtung verbunden, die aus zwei teleskopartigen, verschiebbaren Teilen besteht; auf einem der beiden Teile sitzt eine Nocke, die den auf dem zweiten Teil angebrachten Schalter betätigt, der bei Betätigung einen Fahrzeugstop auslöst.

Der Hauptnachteil dieser Einrichtung besteht im Risiko, dass der Auffahrschutz bei einem heftigen Aufprall auf ein Hindernis und/oder einem durch die Trägheit verzögertes Anhalten des Fahrzeuges, über seine Dehnbarkeit hinaus verformt wird. Dabei könnte die Einrichtung beschadigt und die Schalter blockiert werden, was ein Wiedereinschalten des Fahrzeugantriebmotors verhindern würde.

Der vorliegenden Erfindung liegt die Aufgabe zugrunde, obige Nachteile zu beseitigen. Die Erfindung löst das in den Ansprüchen erläuterte Problem, das aus der Schaffung einer Auffahrschutzvorrichtung besteht, deren Wirksamkeit garantiert wird, unabhängig von der Umgebung und vom Ort des Aufpralls des Auffahrschutzes auf ein Hindernis und dass die Einrichtung unabhängig von der Verformung des Auffahrschutzes zuverlässig arbeitet. Diese Aufgabe wird durch die kennzeichnenden Merkmale des Anspruches 1 gelöst.

Ein aus der Auffahrschutzvorrichtung gemäss Erfindung hervorgehender Vorteil besteht darin, dass die Betätigung der Abschalteinrichtung von der Bewegung von steifen, mit Gelenken verbundenen Elementen ausgeführt wird, die eine kompakte, faltbare Einheit einfacher Konstruktion bilden und eine grosse Funktionssicherheit gewähren. Ein weiterer Vorteil der Einrichtung gemäss Erfindung besteht darin, dass sie mit Kulissen arbeitet, die während ihrer ganzen Verschiebung die Abschalteinrichtung betätigt halten und deren maximale Auslenkung durch die Bewegung von drehbaren Armen bestimmt wird, die gelenkig mit dem Auffahrschutz verbunden sind. Durch die Wahl der Länge der Schwenkarme in Abhängigkeit der Fahrzeugeigenschaften und mit Berücksichtigung des verfügbaren Verschiebungsweges der Kulissen ist es möglich, eine Auffahrschutzvorrichtung so vorzusehen, dass der beim Auffahren auf ein Hindernis mögliche Verschiebungsweg des Auffahrschutzes grösser ist, als der Reaktions- und Anhalteweg des Fahrzeuges.

Auf beiliegenden Zeichnungen werden zwei Ausführungsbeispiele der Erfindung gezeigt, in denen:

– die Figuren 1 und 2 Aufsichten von einer Einrichtung gemäss einem ersten Ausführungsbeispiel der Erfindung schematisch darstellen. Sie zeigen die Elemente der Einrichtung in zwei verschiedenen Arbeitsstellungen;

– die Figur 3 eine Aufsicht von einer Einrichtung gemäss einem zweiten Ausführungsbeispiel der Erfindung darstellt;

– die Figur 4 einen Schnitt A-A der Figur 3 darstellt.

In allen Figuren wird nur der die Einrichtung betreffende Teil des Fahrzeuggestells gezeigt. Der Fahrzeugantriebmotor wie auch die Fahrzeugbremseinrichtung, die möglicherweise im Zusammenhang mit der Arbeitsweise der Einrichtung erwähnt werden, sind in den Figuren nicht dargestellt weil ihre Art und Weise des Zusammenhangs mit der Abschalteinrichtung von der Erfindung nicht betroffen ist.

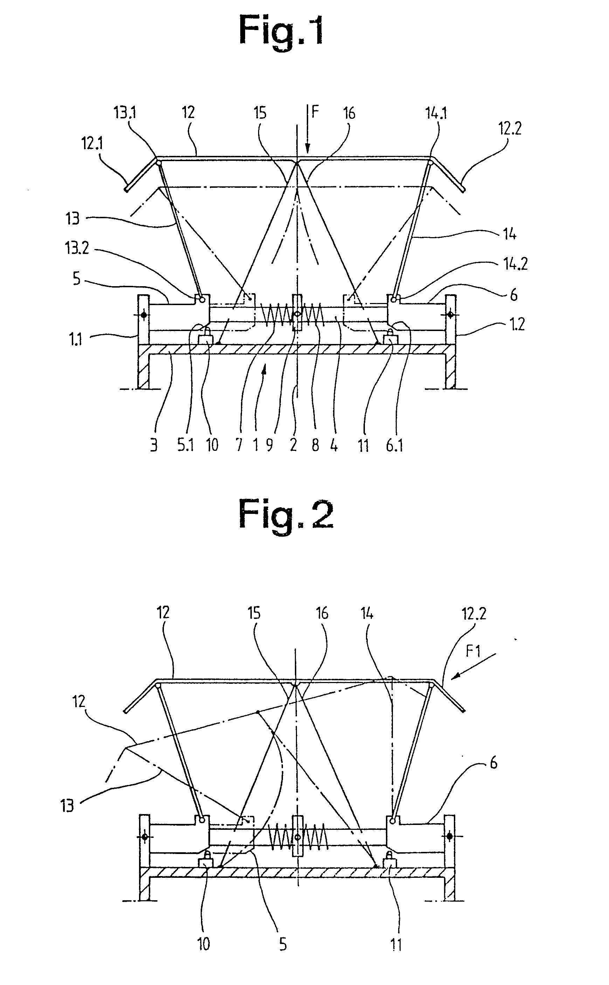

In den Figuren 1 und 2 ist mit 1 ein Fahrzeuggestell eines Flurförderfahrzeuges bezeichnet. Auf dem Fahrzeuggestell 1 sind zwei parallele Längsträger 1.1, 1.2 in gleichen Abständen von der Fahrzeuglängsachse 2 angebracht. Die Längsträger 1.1, 1.2 werden mittels eines Trägers 3, der senkrecht zur Fahrzeuglängsachse 2 verläuft und in kurzer Distanz von den Längsträgerenden angreift, untereinander verbunden. An den Enden der Längsträger 1.1, 1.2 sind die Enden eines Stabes 4 angebracht, der einen rechteckigen Querschnitt aufweist. Der Stab 4 verläuft parallel zum Träger 3 und bildet eine Achse, auf der zwei Kulissen 5, 6 montiert sind. Zwei Druckfedern 7, 8, die auf dem Stab 4 und je auf einer Seite einer auf dem Stab 4 befestigten Abtrennung 9 angeordnet sind, üben je auf eine der Kulissen 5, 6 einen axialen Druck aus, durch den die entsprechende Kulisse an den Anschlag eines Längsträgers 1.1, 1.2 gebracht wird. Jede Kulisse 5, 6 weist auf der der Fahrzeugrückseite zugewandten Seite eine Abschrägung 5.1, 6.1 auf, die mit der Kulisse einen Umschaltnocken bildet, mittels derer beim Verschieben der Kulisse entgegen der von der Feder aufgebrachten Federkraft ein entsprechender Schalter 10, 11, der so beschaffen ist wie ein Mikroschalter, betätigt wird und während der ganzen Verschiebung der Kulisse betätigt bleibt. Die beiden Mikroschalter 10, 11, die die Abschalteinrichtung der Einrichtung bilden, können z.B. in einem Steuerstromkreis des Fahrzeugantriebmotors und möglicherweise in einem Steuerstromkreis der Bremsvorrichtung in Serie geschaltet werden. Aus oben erwähnten Gründen werden diese Elemente nicht dargestellt.

Die Bezugsnummer 12 bezeichnet einen steifen, geraden Auffahrschutz aus Metall, dessen Enden 12.1, 12.2 leicht nach hinten gebogen sind. Der Auffahrschutz 12, dessen Länge grösser ist als die Breite des Fahrzeuges, wird in der Ruhelage parallel zum Träger 3 gehalten.

Die Bezugsnummern 13, 14 bezeichnen zwei Schwenkarme gleicher Länge mittels derer der Auffahrschutz 12 in der Ruhelage gehalten wird. Sie sind symmetrisch geneigt und je auf einer Seite der Fahrzeuglängsachse 2 so angebracht, dass sie einen auf die Fahrzeugvorderseite hin geöffneten Winkel bilden. Eines der Enden 13.1, 14.1 von jedem Schwenkarm 13, 14 ist gelenkig mit dem Auffahrschutz 12 verbunden. Das andere Ende 13.2, 14.2 ist gelenkig mit einer der Kulissen 5, 6 verbunden. Im übrigen ist der Auffahrschutz 12 mit dem Fahrzeuggestell mittels zweier biegsamer Rückhalteelemente verbunden, die aus Stahlseilen 15, 16 bestehen, die symmetrisch geneigt, je auf einer Seite der Fahrzeuglängsachse 2 angebracht sind. Eines der Enden der Stahlseile 15, 16 ist an einer gemeinsamen Befestigung angebracht, die in der Mitte des Auffahrschutzes 12 liegt, während ihr anderes Ende am Träger 3 des Fahrzeuggestells angebracht ist. Die beiden Seile sind so vorgespannt, dass sie die Funktion der beiden, mit den Kulissen 5, 6 zusammenarbeitenden Druckfedern 7, 8 nicht beeinträchtigen.

Figur 1 zeigt, dass beim in Richtung der Fahrzeuglängsachse 2 Einwirken der Kraft F auf den Auffahrschutz, z.B. beim frontalen Aufprall auf ein Hindernis, die Gelenkteileinheit, bestehend aus dem Auffahrschutz 12, den beiden Schwenkarmen 13, 14, und den Kulissen 5, 6, so zusammengelegt wird wie in der Figur 1 mit strichpunktierter Linie angedeutet. Die beiden Stahlseile entspannen sich und die beiden Mikroschalter werden gleichzeitig durch die Abschrägung 5.1, 6.1 der entsprechenden Kulisse 5, 6 betätigt, die entgegen der Kraft der mit ihr zusammenarbeitenden Feder 7, 8 verschoben wird. Die Figur 2, in der nur die wichtigsten Teile aufgeführt sind, zeigt wie sich beim Einwirken einer Kraft F1 auf den Auffahrschutz, zum Beispiel beim Aufprall eines Endes des Auffahrschutzes 12.2 auf ein Hindernis, der bei der Aufprallstelle liegende Schwenkarm um seinen, auf der entsprechenden Kulisse 6 angebrachten Gelenkpunkt dreht. Weil der Auffahrschutz 12 auch in der Mitte mittels Stahlseil 16 mit dem Fahrzeuggestell verbunden ist, dreht er so um das Schwenkarmende 14.1 des Schwenkarmes 14, dass er in die mit strichpunktierter Linie gezeigte Schräglage zu liegen kommt. Dadurch wird die zweite Kulisse 5 entgegen der Kraft der Feder 7 verschoben. Dabei wird der entsprechende Mikroschalter 10 betätigt und das Stahlseil 15 entspannt.

Aus beiden Figuren geht hervor, dass, unabhängig von der Aufprallstelle des Hindernisses auf dem Auffahrschutz 12, mindestens einer der beiden Mikroschalter 10, 11 durch die entsprechende Kulisse 5, 6 betätigt wird und während der ganzen Verschiebung des Auffahrschutzes 12 betätigt bleibt. Die Figuren zeigen auch, dass durch eine Längenänderung der Schwenkarme 13, 14 in der Grössenordnung der Fahrzeugbreite der verfügbare Weg des Auffahrschutzes 12 ohne Änderung von Form und Abmessung desselben erhöht werden kann.

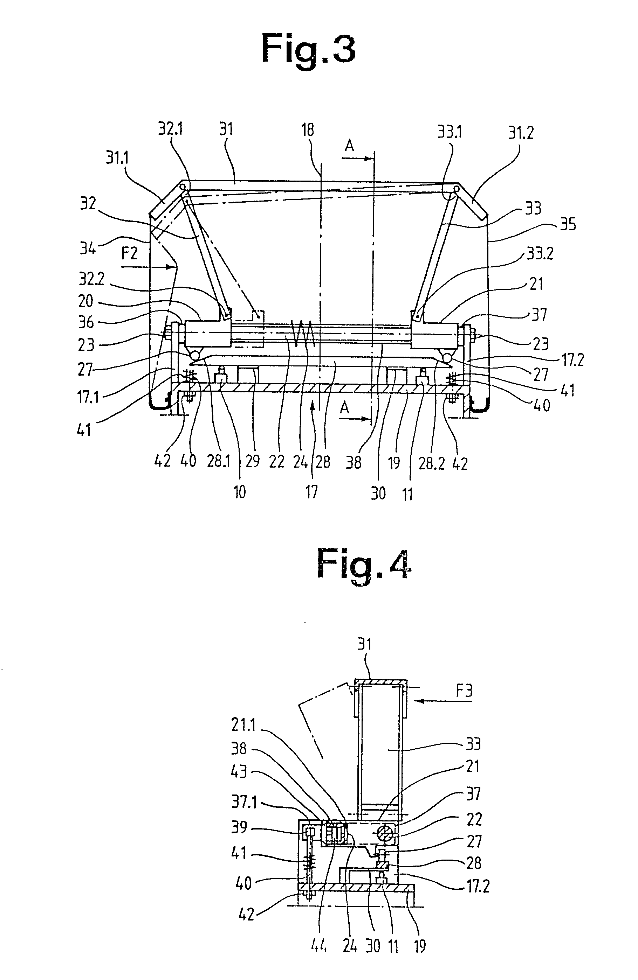

Die Figuren 3 und 4 zeigen eine bevorzugte Ausführungsform der Erfindung. In diesen Figuren bezeichnet die Bezugsnummer 17 ein Fahrzeuggestell eines Flurförderfahrzeuges. Wie in der vorangehenden Ausführungsform findet man zwei parallele Längsträger 17.1, 17.2 auf gleicher Distanz zur Fahrzeuglängsachse 18 angeordnet und untereinander mit einem Träger 19 verbunden. Die Bezugsnummern 20, 21 bezeichnen zwei Kulissen, die verschiebbar auf einer Achse 22 montiert sind, die einen zylindrischen Querschnitt aufweist und an den Enden mit Gewinden versehen ist. Die Achsenenden sind in die Enden der entsprechenden Längsträger 17.1, 17.2 eingelassen und mittels einer Gegenmutter 23 festgemacht. Die Kulissen 20, 21 werden wie in der vorangehenden Ausführungsform durch eine Federkraft in Richtung ihrer entsprechenden Längsträger 17.1, 17.2 gedrückt. Die Federkraft wird dieses Mal nur durch eine Druckfeder 24 aufgebracht, deren Anordnung später beschrieben wird. Im Gegensatz zu der in den Figuren 1 und 2 dargestellten Ausführungsform werden die beiden, ebenfalls auf dem Träger 19 angebrachten Mikroschalter 10, 11 nicht direkt von den Kulissen 20, 21 betätigt. Anstelle einer Abschrägung besitzen beide Kulissen 20, 21 je eine Betätigungsrolle 27, die beim Verschieben auf einen Umschaltnocken 28 drückt, der zwischen den Mikroschaltern 10, 11 und den Kulissen 20, 21 angebracht und den beiden Kulissen gemeinsam ist. Zu diesem Zweck weist der Umschaltnocken 28 an jedem Ende eine Abschrägung 28.1, 28.2 auf und ist mittels einer Blattfeder 29, 30 elastisch am Träger 19 befestigt. Ein steifer, aus Metall bestehender Auffahrschutz 31 wird mittels zweier Schwenkarme 32, 33 gleicher Länge gehalten. Die Schwenkarme 32, 33 sind symmetrisch geneigt, je auf einer Seite der Fahrzeuglängsachse 18 angebracht und deren Enden 32.1, 32.2, 33.1, 33.2 gelenkig mit dem Auffahrschutz 31 respektiv mit der entsprechenden Kulisse 20, 21 verbunden. Im übrigen sind die Enden 31.1, 31.2 des Auffahrschutzes mit den Längsträgern 17.1, 17.2 des Fahrzeuggestells 17 mittels zweier aus synthetischem Material bestehenden Bändern 34, 35 verbunden, die seitlich des Fahrzeuges angebracht sind und die beiden biegsamen Rückhalteelemente bilden.

Beim Aufprall des Auffahrschutzes 31 auf ein Hindernis funktioniert die Auffahrschutzvorrichtung gleich wie in den Figuren 1 und 2 dargestellt, in denen eine frontale Kollision und eine Kollision an den Auffahrschutzenden dargestellt ist. Ein wesentlicher, zusätzlicher Vorteil der in den Figuren 3 und 4 dargestellten Ausführungsform besteht darin, dass bei einer seitlich am Fahrzeug, an dem einen oder andern biegsamen Band 34, 35 angreifenden Kraft F2 eine entsprechende Verschiebung des Auffahrschutzes 31 auftritt und dadurch die Mikroschalter 10, 11 betätigt werden. Diese mögliche Aufprallart ist in der Figur 3 mit strichpunktierter Linie angedeutet. Der Auffahrschutz 31 und seine beiden, entsprechend angeordneten Bänder 34, 35 gewähren einen wirksamen Schutz gegen frontale wie auch seitliche Aufpraller.

Zwischen jeder Kulisse 20, 21 und dem entsprechenden Längsträger 17.1, 17.2 ist ein Schwenkhebel 36, 37 angebracht, der um die zylindrische Achse 22 der Kulissen 20, 21 schwenkbar ist. Die beiden Schwenkhebel 36, 37 sind an ihrem unteren Teil durch ein U-Profil 38 miteinander verbunden, dessen Schenkel nach unten gerichtet sind und die sich in eine entsprechende, rechteckige, auf dem unteren Teil von jeder Kulisse 20, 21 vorgesehene Nute 20.1, 21.1 einlassen. Zwischen den beiden Kulissen 20, 21 ist auf dem U-Profil 38 eine Druckfeder 24 angeordnet, die, wie oben erwähnt, die Federkraft erzeugt und durch die die beiden Kulissen 20, 21 in Richtung ihrer entsprechenden Längsträger 17.1, 17.2 gedrückt werden. Die beiden Schwenkhebel 36, 37 sind an ihren unteren Enden 36.1, 37.1 je mit einem Bolzen 39 versehen, an dem ein Stab 40 befestigt ist, dessen Gewindeende frei durch eine entsprechende Bohrung des Trägers 19 durchgeht. Zwischen dem Träger 19 und dem Bolzen 39 ist auf jedem Stab 40 eine Druckfeder 41 montiert. Mit einer am Stabende vorgesehenen Mutter 42 lässt sich die Federspannung so einstellen, dass die Schwenkhebel 36, 37 und mit ihnen die beiden Kulissen 20, 21 eine vertikale Ruheposition einnehmen, die der horizontalen Lage der die Kulissen 20, 21 mit dem Auffahrschutz 31 verbindenden Schwenkarme 32, 33 entspricht. Um die relative Verschiebung zwischen jeder Kulisse 20, 21 und dem U-Profil 38 zu verbessern wird ein Plättchen 43, das am unteren Ende jeder Kulisse 20, 21 angebracht ist, mit einer Rolle 44 versehen, die zwischen den Schenkeln des U-Profils liegt.

Dank dieser Anordnung, die ein Schwenken der Einrichtung nach unten entgegen der von der Druckfeder 41 aufgebrachten Kraft erlaubt, lässt sich beim Einwirken einer vertikalen Kraft F3, die z.B. von einer Ladung oder auch von einer Person hervorgerufen werden kann, auf den Auffahrschutz 31 eine Beschädigung der Einrichtung vermeiden. Aus den Figuren 3 und 4 geht hervor, dass durch geeignete Wahl der Lage der Achse der auf jeder Kulisse 20, 21 angebrachten Betätigungsrolle 27 relativ zur Achse 22 der Kulissen und zur Lage der Enden 28.1, 28.2 des Umschaltnockens 28 die Schwenkbewegung der Kulissen auch zur Betätigung der Mikroschalter 10, 11 verwendet werden könnte und damit beim Einwirken einer vertikalen Kraft auf den Auffahrschutz 31 einen automatischen Fahrzeugstop auslösen.

Es ist selbstverständlich, dass mehrere Varianten in oben beschriebener Ausführungsart angewendet werden können ohne den Rahmen der Erfindung zu sprengen. Z.B. könnten die beiden Schwenkarme 13, 14 oder 32, 33 so angeordnet werden, dass sie anstatt unter sich, einen auf die Fahrzeugvorderseite hin geöffneten Winkel bilden, einen auf die Fahrzeugrückseite hin geöffneten Winkel bilden, was eine Richtungsumkehr der Verschiebung der Kulissen 5, 6 oder 20, 21 zur Folge hätte. Desgleichen könnten die getrennten, in der Ausführungsform gemäss Figur 1 und 2 vorgesehenen Druckfedern durch eine den beiden Kulissen gemeinsamen Druckfeder ersetzt werden. In der Ausführungsform gemäss Figur 3 und 4 wäre es auch möglich, die Abschalteinrichtung mit nur einem Schalter auszurüsten, der durch den Umschaltnocken 28 betätigt wird oder auch anstelle des Umschaltnockens 28 zwei getrennte und je einer Kulisse 20, 21 und je einem Schalter 10, 11, zugeordnete Umschaltnocken vorzusehen.

## Patentansprüche

1. Auffahrschutzvorrichtung für Flurförderfahrzeuge, in der ein beweglicher Auffahrschutz (12, 31), der sich mindestens über die ganze Fahrzeugbreite erstreckt und mittels einer Federkraft in einer Ruhelage gehalten wird, mit einer Abschalteinrichtung (10, 11) zusammenarbeitet, welche beim Auffahren des Auffahrschutzes (12, 31), der dabei entgegen der Federkraft bewegt wird, auf ein Hindernis einen Fahrzeugstop auslöst, wobei der Auffahrschutz (12, 31) eine kurze Betätigungsbewegung der Abschalteinrichtung (10, 11) bewirkt und anschliessend während der Verzögerung des Fahrzeuges eine längere Verschiebungsbewegung ausführt, bei der die Abschalteinrichtung (10, 11) betätigt bleibt, dadurch gekennzeichnet, dass der Auffahrschutz (12, 31) am Fahrzeuggestell (1, 17) mittels zweier Schwenkarme (13, 14; 32, 33) gleicher Länge befestigt ist, die in der Ruhelage des Auffahrschutzes (12, 31) symmetrisch seitlich geneigt, je auf einer Seite der Fahrzeuglängsachse (2, 18) angeordnet sind und wovon eines der Enden (13.1, 14.1; 32.1, 33.1) gelenkig mit dem Auffahrschutz (12, 31), das andere Ende (13.2, 14.2; 32.2, 33.2) gelenkig mit je einer Kulisse (5, 6; 20, 21) verbunden ist, die mit einer Federkraft beaufschlagt wird und auf einer Achse (4, 22) verschiebbar ist, die senkrecht zur Fahrzeuglängsachse (2, 18) auf dem Fahrzeuggestell (1, 17) befestigt ist, wobei für jede Kulisse (5, 6; 20, 21) ein Umschaltnocken (5.1, 6.1; 28) vorgesehen ist, mittels dem die Kulisse (5, 6; 20, 21) bei der Verschiebung entgegen der Federkraft mit der Abschalteinrichtung (10, 11) zusammenwirkt, und wobei der Auffahrschutz (12, 31) selbst mittels zweier biegsamer, gleich langer Rückhalteelemente (15, 16; 34, 35), die symmetrisch je auf einer Seite der Fahrzeuglängsachse (2, 18) angeordnet sind, direkt mit dem Fahrzeuggestell (1, 17) verbunden ist.

2. Auffahrschutzvorrichtung gemäss Anspruch 1, dadurch gekennzeichnet, dass die Abschalteinrichtung aus zwei Schaltern (10, 11) besteht, die auf dem Verschiebungsweg der Kulissen (5, 6) am Fahrzeuggestell (1, 17) befestigt sind, und ein jeder einer Kulisse zugeordnet ist, wobei jede Kulisse (5, 6) eine Abschrägung (5.1, 6.1) aufweist, die mit der Kulisse selbst den Umschaltnocken bildet, durch die der entsprechende Schalter (10, 11) betätigt wird.

3. Auffahrschutzvorrichtung gemäss Anspruch 1, dadurch gekennzeichnet, dass der jeder Kulisse (20, 21) zugeordnete Umschaltnocken (28) elastisch am Fahrzeuggestell (17) befestigt und zwischen der Kulisse (20, 21) und der am Fahrzeuggestell (17) angebrachten Abschalteinrichtung (10, 11) angeordnet ist.

4. Auffahrschutzvorrichtung gemäss Anspruch 1, dadurch gekennzeichnet, dass die beiden biegsamen Rückhalteelemente aus Bändern (34, 35) bestehen, die seitlich am Fahrzeug angeordnet sind, wobei jedes Band einerseits mit einem der Enden (31.1, 31.2) des Auffahrschutzes (31) und anderseits mit dem Fahrzeuggestell (17) verbunden ist.

5. Auffahrschutzvorrichtung gemäss Anspruch 1, dadurch gekennzeichnet, dass die Kulissen (20, 21) schwenkbar auf ihrer Achse (22) angeordnet sind und mit einer Federkraft beaufschlagt werden, mittels welcher der Auffahrschutz (31) von unten nach oben in eine Lage gebracht wird bei der die Schwenkarme (32, 33) im wesentlichen horizontal zu liegen kommen.

## Revendications

1. Dispositif de protection contre les collisions pour chariots de manutention, dans lequel un pare-chocs mobile (12, 31), s'étendant sur au moins toute la largeur du véhicule et maintenu par effet de ressort dans une position de repos, coopère avec un dispositif de déconnexion (10, 11) qui, en cas d'impact du pare-chocs (12, 31) avec un obstacle, ce qui provoque son déplacement à l'encontre de l'effet de ressort, déclenche l'arrêt du véhicule, le pare-chocs (12, 31) produisant, lors de l'impact, un bref mouvement d'actionnement du dispositif de déconnexion (10, 11) et effectue ensuite, pendant la décélération du véhicule, un mouvement de déplacement plus long, au cours duquel le dispositif de déconnexion (10, 11) reste actionné, caractérisé en ce que le pare-chocs (12, 31) est fixé au châssis (1, 17) du véhicule par deux bras pivotants (13, 14; 32, 33) de même longueur et qui, à la position de repos du pare-chocs (12, 31), sont disposés de part et d'autre de l'axe longitudinal (2, 18) du véhicule en étant inclinés transversalement et symétriquement, chaque bras étant articulé par une extrémité (13.1, 14.1; 32.1, 33.1) sur le pare-chocs (12, 31) et par l'autre extrémité (13.2, 14.2; 32.2, 33.2) sur un coulisseau (5, 6; 20, 21) qui est sollicité par un ressort et peut coulisser sur un axe (4, 22) fixé transversalement à l'axe longitudinal (2, 18) sur le châssis (1, 17) du véhicule pour chaque coulisseau (5, 6; 20, 21), étant prévue une came de commutation (5.1, 6.1; 28) par laquelle le coulisseau (5, 6; 20, 21) coopère avec le dispositif de déconnexion (10, 11) lorsqu'il est décalé contre l'effet du ressort, le pare-chocs (12, 31) lui-même étant relié directement au châssis (1, 17) du véhicule par deux éléments de retenue flexibles (15, 16; 34, 35) de même longueur, qui sont disposés symétriquement de part et d'autre de l'axe longitudinal (2, 18) du véhicule.

2. Dispositif selon la revendication 1, caractérisé en ce que le dispositif de déconnexion est formé de deux interrupteurs (10, 11) qui sont fixés sur le châssis (1, 17) du véhicule, sur le trajet de déplacement des coulisseaux (5, 6), et qui sont chacun associés à un coulisseau, chaque coulisseau (5, 6) présentant un biseau (5.1, 6.1) qui constitue, avec le coulisseau, lui-même la came de commutation par laquelle l'interrupteur (10, 11) correspondant est actionné.

3. Dispositif selon la revendication 1, caractérisé par une came de commutation (28), fixée élastiquement au châssis (17) du véhicule, qui est associée aux deux coulisseaux (20, 21) et est disposée entre les coulisseaux 20, 21) et le dispositif de déconnexion (10, 11) monté sur le châssis (17) du véhicule.

4. Dispositif selon la revendication 1, caractérisé en ce que les deux éléments de retenue flexibles sont des bandes (34, 35) qui sont disposées latéralement sur le véhicule, chaque bande étant reliée d'un côté à l'une des extrémités (31.1, 31.2) du pare-chocs (31) et de l'autre côté au châssis (17) du véhicule.

5. Dispositif selon la revendication 1, caractérisé en ce que les coulisseaux (20, 21) sont disposés basculants sur leur axe (22) et sont sollicités par un ressort au moyen duquel le pare-chocs (31) est monté de bas en haut à une position où les bras pivotants (32, 33) prennent une orientation essentiellement horizontale.

## Claims

1. Collision protection device for conveying vehicles, in which a displaceable collision protector (12, 31) extending at least over the overall width of said vehicle and being held in a rest position by means of spring tension force cooperates with a switching-off device (10, 11), which upon collision of the collision protector (12, 31) with an obstacle and displacement of the collision protector against said spring tension force causes said vehicle to stop, wherein said collision protector (12, 31) causes a short actuating movement of the switching-off device and subsequently is displaced over a longer distance while said vehicle is decelerated and while said switching-off device (10, 11) remains actuated, characterized in that, the collision protector (12, 31) is mounted to the chassis (1, 17) of the vehicle by means of two swing arms (13, 14; 32, 33) of equal length, which in the rest position of the collision protector (12, 31) are arranged each on one side of the longitudinal axis (2, 18) of the vehicle in a symmetric and laterally inclined position, wherein the ones of their ends (13.1.; 14.1; 32.1, 33.1) are pivotably mounted to the collision protector (12, 31) and their other ends (13.2, 14.2; 32.2, 33.2) are pivotably mounted each to a sliding link member (5, 6; 20, 21), each of said sliding link members being subject to a spring tension force and being displaceable on a shaft (4, 22) mounted to the chassis (1, 17) in normal direction to said longitudinal axis (2, 18), wherein for each sliding link member (5, 6; 20, 21) a switching cam (5.1, 6.1; 28) is provided, by means of which the sliding link member (5, 6; 20, 21) cooperates with the switching-off device when displaced against spring tension force and wherein the collision protector (12, 31) itself is connected directly to the chassis (1, 17) by means of two flexible retaining elements of equal length (15, 16; 34, 35), which are symmetrically arranged each on one side of the longitudinal axis (2, 18).

2. The collision protection device according to claim 1, characterized in that said switching-off device comprises two switches (10, 11) which are mounted on said vehicle chassis (1, 17) along the displacement path of the sliding link members (5, 6), each switch being associated with a respective sliding link member, wherein each sliding link member (5, 6) having a bevel (5.1, 6.1) for forming said switching cam together with said sliding link member, by which switching cam the respective switch (10, 11) is actuated.

3. The collision protection device according to claim 1, characterized in that the switching cam (28) associated to each sliding link member (20, 21) resiliently mounted on said vehicle chassis (17) between said two sliding link members and said switching-off device (10, 11).

4. The collision protection device according to claim 1, characterized in that said two flexible retaining elements comprise bands (34, 35) which are arranged on respective sides of said vehicle, wherein each band being connected on one side with an associated end (31.1, 31.2) of said collision protector (31) and on the other side to said vehicle chassis (17).

5. The collision protection device according to claim 1, characterized in that the sliding link members (20, 21) being swivably arranged on their shaft (22) and subject to the influence of a spring tension force for maintaining said collision protector (31) in a raised position in which said swing arms (32, 33) extend substantially horizontally.

EP 0 192 940 B1

# Fig.1

# Fig.2

# Fig.3

# Fig.4